# EUROPEAN PATENT SPECIFICATION

(11) **EP 2 565 258 B1**
(45) Date of publication and mention of the grant of the patent: **07.10.2015**
(21) Application number: 11774366.6
(22) Date of filing: 25.04.2011
(51) Int. Cl.: A47J 31/40, A47J 43/044

(54) **RAINBOW COCKTAIL PREPARER**
VORRICHTUNG ZUR HERSTELLUNG VON RAINBOW-COCKTAILS
MACHINE À PRÉPARER LES COCKTAILS ARC-EN-CIEL

(30) Priority: 29.04.2010 CN 201010158378
(43) Date of publication of application: 06.03.2013
(73) Proprietor: Lin, Bo, Chengdu, Sichuan 610016 (CN)
(72) Inventor: Lin, Bo, Chengdu, Sichuan 610016 (CN)
(74) Representative: Hryszkiewicz, Danuta
(86) International application number: PCT/CN2011/073240
(87) International publication number: WO 2011/134375

(56) References cited:
- CN-A- 101 336 805
- CN-A- 101 824 375
- CN-Y- 2 843 252

## Description

The invention relates to a cocktail maker, and more particularly to a rainbow cocktail maker.

Rainbow cocktails, which present different stratified colors, are very difficult to prepare. To prepare a rainbow cocktail, base liquors and beverages having different specific gravities are added to a goblet in turn. A typical method for preparing a rainbow cocktail is to lean a bar spoon against the inner wall of a goblet, and make the liquor flows down along the bar spoon and into the goblet slowly. However, in actual preparation, only those including liquors apparently different in specific gravities can be stratified; most classical rainbow cocktail formulas cannot be well stratified and only two or three layers can be presented, because different layers are apt to be mixed with each other. In addition, the goblet body cannot be deep so that the bar spoon can be close to the liquor level. Thus, the manual preparation is very difficult and time consuming. Usually, an ordinary bartender cannot prepare a rainbow cocktail with more than five layers especially when using a goblet having a deep body. Chinese Pat. Appl. Publ. No. 101336805A discloses an automatic cocktail preparer that includes a frame, multiple can bodies disposed on the frame, a pipe system connecting the can bodies to a liquor outlet, and a programmable control unit. The automatic cocktail preparer is used to mix different beverages to prepare a cocktail but cannot stratify a cocktail into multiple layers.

In view of the above-described problems, it is one objective of the invention to provide a rainbow cocktail maker. The maker can spray different liquors evenly along the side wall of the goblet by means of the principle of centrifugal force to achieve a good stratification effect. The rainbow cocktail maker is simple in structure, convenient for operation, and fast for preparation.

The technical scheme of the invention is summarized as follows. A rainbow cocktail maker comprises: a stand; a liquor outlet head comprising an inner cavity and a side wall comprising a plurality of outlet holes; a measuring cup; a motor disposed on the stand; and a transmission device. The liquor outlet head is cylindrical and vertically disposed on the stand. The outlet holes are connected with the inner cavity, and the inner cavity is connected with the measuring cup. The liquor outlet head is driven by the motor to rotate via the transmission device.

Preferably, a connection device is disposed between the liquor outlet head and the stand for adjusting a distance between the liquor outlet head and the stand.

Preferably, an opening valve is disposed between the measuring cup and the inner cavity.

Preferably, a rotational speed of the liquor outlet head is 300-1500 rpm.

Preferably, the outlet holes are no less than 3 in number, and are disposed along a circumferential direction of the side wall of the liquor outlet head with equal intervals between each other.

Preferably, the stand comprises a lifting support for adjusting a height of the stand.

Preferably, the measuring cup comprises a plurality of plates. The plates divide the measuring cup into several independent compartments. Each compartment comprises a bottom, and the bottom is provided with a through hole to connect with the inner cavity.

Preferably the stand further comprises a battery box for accommodating batteries to drive the motor.

Advantages of the rainbow cocktail maker are summarized below. By means of the principle of centrifugal force, the rainbow cocktail maker adds liquors into a goblet automatically rather than manually. Thus, the prepared rainbow cocktails not only have a good stratification effect, but also have many layers, which cannot be realized by the manual preparation. Furthermore, the maker of the invention has high efficiency that the preparing time for each cocktail of the invention is much less than that prepared by a manual preparation. Finally, the maker is driven by batteries, and thus has a small size and light weight. Thus, it is convenient to prepare cocktails on guests' tables, thereby avoiding the shake in the delivery which will otherwise affect the stratification effect.

The invention is described hereinbelow with reference to the accompanying drawings, in which
FIG. 1 is a schematic diagram of a rainbow cocktail maker in accordance with one embodiment of the invention;
FIG. 2 is a schematic diagram of a liquor outlet head of a rainbow cocktail maker of FIG. 1;
FIG. 3 is a top view of a measuring cup of a rainbow cocktail maker;

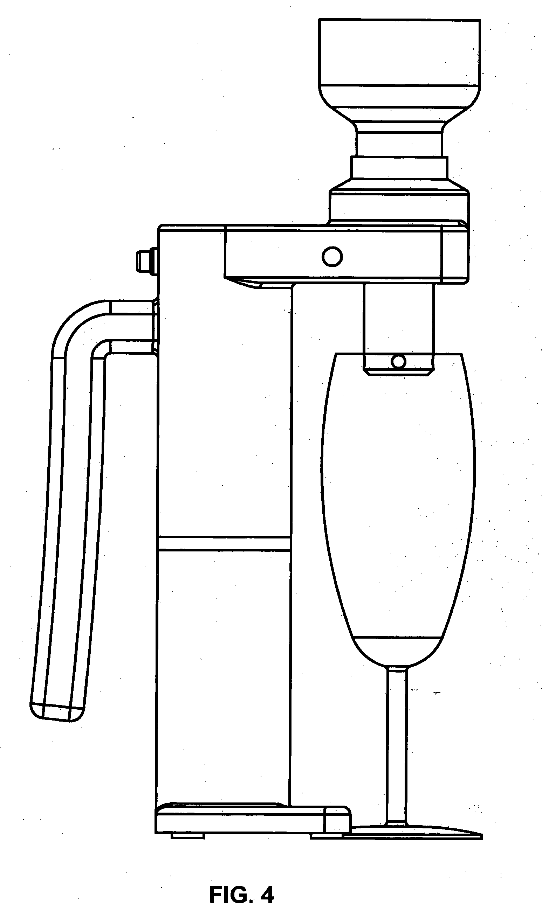

FIG. 4 is a schematic diagram of a rainbow cocktail maker of FIG. 1 during use;
FIG. 5 is a schematic diagram of a rainbow cocktail maker in accordance with another embodiment of the invention; and
FIG. 6 is a schematic diagram of a liquor outlet head of a rainbow cocktail maker of FIG. 5.

To further illustrate the invention, experiments detailing a rainbow cocktail maker are described below. It should be noted that the following examples are intended to describe and not to limit the invention.

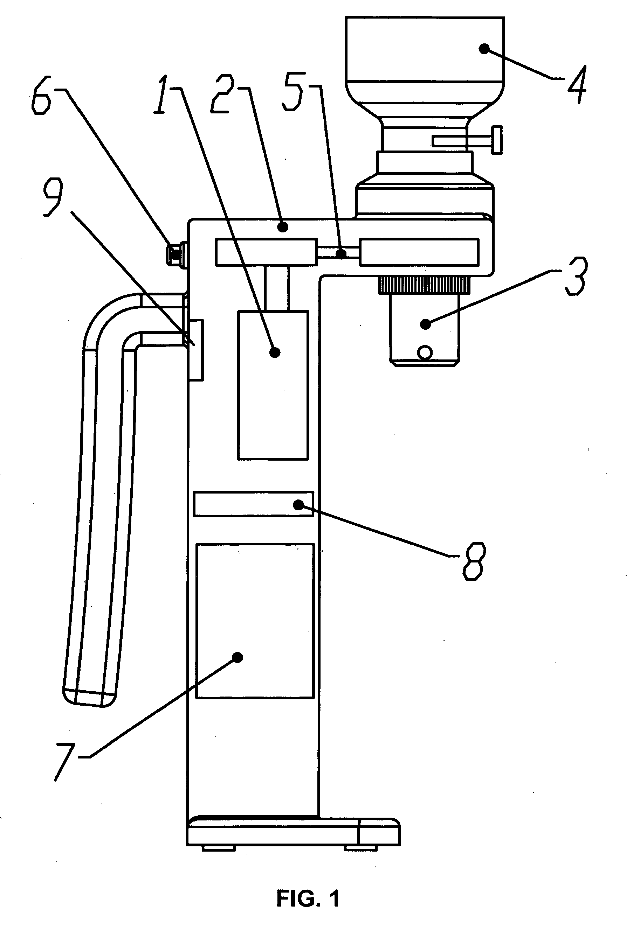

As shown in FIG. 1, a rainbow cocktail maker comprises: a stand, a motor 1 disposed on the stand, a transmission device 2, a speed controller 5, a liquor outlet head 3, a measuring cup 4, a switch 6, a lifting support 8, and batteries 7 for driving the motor 1. The liquor outlet head 3 is a hollow column vertically disposed on the stand. The liquor outlet head 3 comprises an inner cavity and a side wall comprising a plurality of outlet holes.

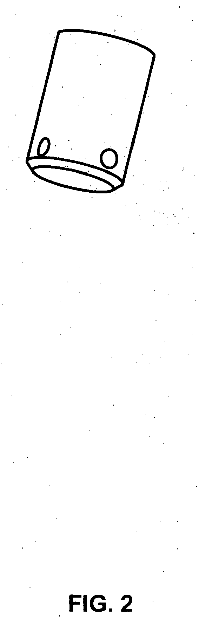

As shown in FIG. 2, the outlet holes are connected with the inner cavity, and the inner cavity is connected with the measuring cup 4.

The liquor outlet head 3 is driven by the motor 1 to rotate via the transmission device 2 and the speed controller 5. The motor 1 is controlled by the switch 2. The lifting support 8 is used to adjust the height of the stand in accordance with the height of the goblet.

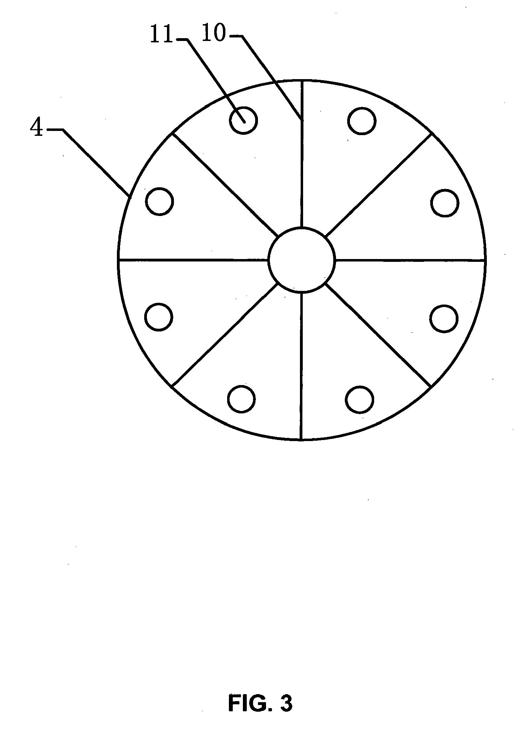

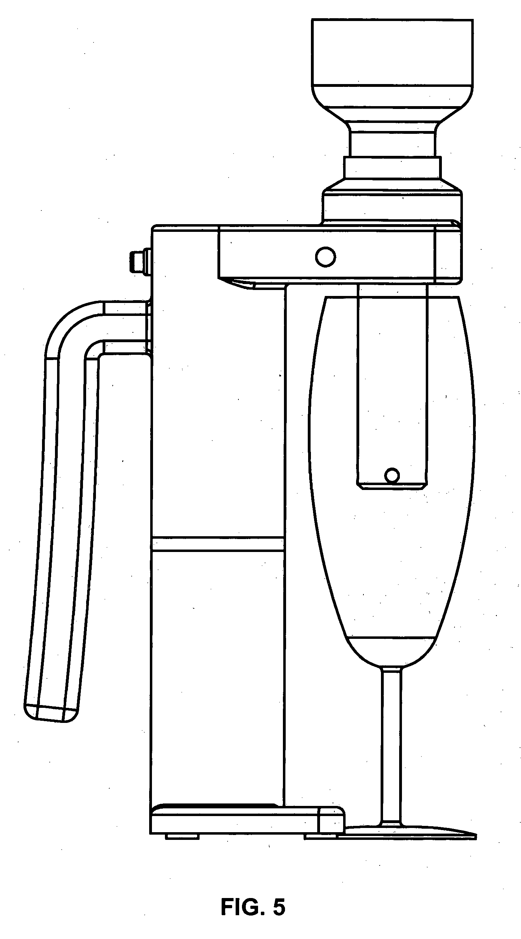

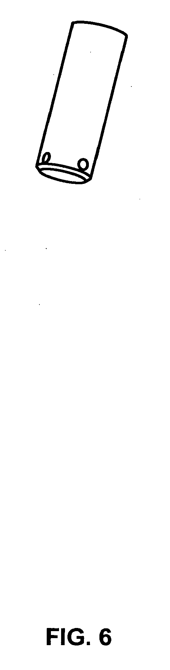

As shown in FIG. 3, the measuring cup 4 comprises eight plates 10 which divide the measuring cup 4 into eight independent compartments with the same size. Each compartment comprises a bottom, and the bottom is provided with a through hole 11 to connect with the inner cavity. By rotating the measuring cup, each compartment can be connected with the liquor outlet head. Thus, in the preparation for a cocktail, liquors for different layers are added into the corresponding compartments, rotating the measuring cup to connect each compartment with the liquor outlet head in order. To acquire a better effect, it is important to control the distance between the liquor outlet head 3 and the liquor level and the distance the liquor sliding along the wall of the goblet, thus, a regulating knob 9 can be arranged between the liquor outlet head 3 and the stand to adjust the distance between the liquor outlet head 3and the stand, that is, the distance between the liquor outlet head 3 and the goblet base, as shown in FIG. 5. The liquor outlet head 3 matched with the regulating knob 9 is shown in FIG. 6 and provide with threads or racks matched with a connection device which are driven by the regulating knob 9 to adjust the distance between the liquor outlet head 3 and the stand, that is, the distance between the liquor outlet head 3 and the goblet. The rotational speed of the liquor outlet head 3 is 300-1500 rpm. The transmission device 2 employs a gear drive, belt drive, or the like.

The maker above is also provided with an areometer to measure the specific gravity of different liquors and to determine the order for adding the liquors into the goblet.

An opening valve can be arranged between the measuring cup and the inner cavity for controlling the speed of the liquors running out of the measuring cup.

During use, the areometer is used to measure the specific gravity of the liquor, and liquors are added into the goblet in order according to the specific gravity. As shown in FIG. 3, a slender goblet is used. First of all, liquor having a large specific gravity is added into the goblet directly, the maker of the invention is disposed above the goblet, and the lifting support 8 and the regulating knob 9 are adjusted to extend the liquor outlet head 3 into the goblet. Then, required volumes of liquors are added into the measuring cup 4. Turn on the switch 6 to make the liquor head rotate; after pressing the opening valve, the liquor is sprayed on the wall of the goblet evenly and runs down along the wall into the goblet due to the centrifugal force produced during the rotation of the liquor head. Thus, a new layer is formed. Then, release the opening valve and adjust the regulating knob 9 to raise the height of the liquor outlet head for leaving some space for the next layer of liquor. Liquor for the next layer is then added and the next layer is formed by repeating the above steps. The maker of the invention can prepare rainbow cocktails having many layers of different color conveniently with high efficiency, and each layer has clear margin which cannot be achieved by manual preparation methods.

## Claims

1. A rainbow cocktail maker, comprising:
a) a stand;
b) a liquor outlet head comprising an inner cavity and a side wall comprising a plurality of outlet holes;
c) a measuring cup;
d) a motor disposed on the stand; and
e) a transmission device;
wherein
the liquor outlet head is cylindrical and vertically disposed on the stand;
the outlet holes are connected with the inner cavity, and the inner cavity is connected with the measuring cup; and
the liquor outlet head is driven by the motor to rotate via the transmission device.

2. The maker of claim 1, **characterized in that** a connection device is disposed between the liquor outlet head and the stand for adjusting a distance between the liquor outlet head and the stand.

3. The maker of claim 1 or 2, **characterized in that** an opening valve is disposed between the measuring cup and the inner cavity.

4. The maker of claim 1 or 2, **characterized in that** a rotational speed of the liquor outlet head is 300-1500 rpm.

5. The maker of claim 1 or 2, **characterized in that** the outlet holes are no less than 3 in number, and are disposed along a circumferential direction of the side wall of the liquor outlet head with equal intervals between each other.

6. The maker of claim 1 or 2, **characterized in that** the stand comprises a lifting support for adjusting a height of the stand.

7. The maker of claim 1 or 2, **characterized in that**
the measuring cup comprises a plurality of plates;
the plates divide the measuring cup into several independent compartments; and
each compartment comprises a bottom, and the bottom is provided with a through hole to connect with the inner cavity.

8. The maker of claim 1, **characterized in that** the stand further comprises a battery box for accommodating batteries to drive the motor.

## Patentansprüche

1. Rainbow-Cocktail-Mixgerät, umfassend:
a) einen Sockel;
b) einen Flüssigkeitsauslasskopf umfassend einen inneren Hohlraum und eine Seitenwand, die mehrere Auslasslöcher umfasst;
c) einen Messbecher;
d) einen auf dem Sockel angeordneten Motor; und
e) eine Übertragungsvorrichtung;
wobei
der Flüssigkeitsauslasskopf zylindrisch ist und senkrecht auf dem Sockel angeordnet ist;
die Auslasslöcher mit dem inneren Hohlraum verbunden sind und der innere Hohlraum mit dem Messbecher verbunden ist; und
der Flüssigkeitsauslasskopf durch den Motor zum Rotieren über die Übertragungsvorrichtung getrieben wird.

2. Mixgerät nach Anspruch 1, **dadurch gekennzeichnet, dass** eine Verbindungsvorrichtung zwischen dem Flüssigkeitsauslasskopf und dem Sockel zum Einstellen eines Abstands zwischen dem Flüssigkeitsauslasskopf und dem Sockel angeordnet ist.

3. Mixgerät nach Anspruch 1 oder 2, **dadurch gekennzeichnet, dass** ein Öffnungsventil zwischen dem Messbecher und dem inneren Hohlraum angeordnet ist.

4. Mixgerät nach Anspruch 1 oder 2, **dadurch gekennzeichnet, dass** eine Rotationsgeschwindigkeit des Flüssigkeitsauslasskopfes 300-1500 UpM beträgt.

5. Mixgerät nach Anspruch 1 oder 2, **dadurch gekennzeichnet, dass** die Anzahl der Auslasslöcher nicht weniger als 3 beträgt und sie einer Umfangsrichtung der Seitenwand des Flüssigkeitsauslasskopfes entlang in gleichen Abständen zwischen einander angeordnet sind.

6. Mixgerät nach Anspruch 1 oder 2, **dadurch gekennzeichnet, dass** der Sockel eine Hebestütze zum Einstellen einer Höhe des Sockels umfasst.

7. Mixgerät nach Anspruch 1 oder 2, **dadurch gekennzeichnet, dass**
der Messbecher mehrere Platten umfasst;
die Platten den Messbecher in mehrere unabhängige Kompartimente unterteilen; und
jedes Kompartiment einen Boden umfasst und der Boden mit einem durchgehenden Loch zum Verbinden mit dem inneren Hohlraum versehen ist.

8. Mixgerät nach Anspruch 1, **dadurch gekennzeichnet, dass** der Sockel ferner einen Batteriekasten zum Unterbringen von Batterien zum Antreiben des Motors umfasst.

## Revendications

1. Préparateur de cocktail arc en ciel, comprenant :
a) un socle ;
b) une tête de sortie de liqueur comprenant une cavité interne et une paroi latérale comportant une pluralité de trous de sortie ;
c) un bol de mesure ;
d) un moteur disposé sur le socle ; et
e) un dispositif de transmission ;
dans lequel
la tête de sortie de liqueur est cylindrique et disposée verticalement sur le socle ;
les trous de sortie sont connectés à la cavité interne, et la cavité interne est connectée au bol de mesure ; et
la tête de sortie de liqueur est entraînée par le moteur afin de tourner via le dispositif de transmission.

2. Préparateur selon la revendication 1, **caractérisé en ce qu'**un dispositif de connexion est disposé entre la tête de sortie de liqueur et le socle afin d'ajuster une distance entre la tête de sortie de liqueur et le socle.

3. Préparateur selon la revendication 1 ou 2, **caractérisé en ce qu'**une vanne d'ouverture est disposée entre le bol de mesure et la cavité interne.

4. Préparateur selon la revendication 1 ou 2, **caractérisé en ce qu'**une vitesse de rotation de la tête de sortie de liqueur est de 300 à 1500 tr/min.

5. Préparateur selon la revendication 1 ou 2, **caractérisé en ce que** les trous de sortie ne sont pas moins de 3 et sont disposés dans un sens circonférentiel de la paroi latérale de la tête de sortie de liqueur avec des intervalles égaux entre eux.

6. Préparateur selon la revendication 1 ou 2, **caractérisé en ce que** le socle comprend un support élévateur pour ajuster une hauteur du stand.

7. Préparateur selon la revendication 1 ou 2, **caractérisé en ce que**
le bol de mesure comprend une pluralité de plateaux ;
les plateaux divisent le bol de mesure en plusieurs compartiments indépendants ; et
chaque compartiment comprend un fond et le fond est pourvu d'un trou traversant pour le connecter à la cavité interne.

8. Préparateur selon la revendication 1, **caractérisé en ce que** le socle comprend en outre un compartiment à piles pour y loger des piles destinées à entraîner le moteur.
